# EUROPEAN PATENT SPECIFICATION

(11) **EP 1 698 653 B1**
(45) Date of publication and mention of the grant of the patent: **15.10.2008**
(21) Application number: 04806977.7
(22) Date of filing: 14.12.2004
(51) Int. Cl.: C08J 3/12

(54) **METHOD OF GRANULATING SOFT POLYOLEFIN RESIN AND GRANULE THEREOF**
VERFAHREN ZUM GRANULIEREN VON WEICHEM POLYOLEFINHARZ UND GRANULAT DAVON
PROCEDE DE GRANULATION DE RESINE POLYOLEFINIQUE MOLLE ET SON GRANULE

(30) Priority: 22.12.2003 JP 2003424361
(43) Date of publication of application: 06.09.2006
(73) Proprietor: IDEMITSU KOSAN CO., LTD., Tokyo 100-8321 (JP)
(72) Inventor: MORIYAMA, Koji, Chiba, 2990107 (JP); YUZAKI, Syoichi, Chiba, 2990107 (JP)
(74) Representative: Gille Hrabal Struck Neidlein Prop Roos
(86) International application number: PCT/JP2004/018616
(87) International publication number: WO 2005/061591

(56) References cited:
- EP-A1- 0 962 459
- WO-A-96/22328
- WO-A-03/000753
- JP-A- 2002 030 152
- US-A1- 2002 031 657

## Description

### TECHNICAL FIELD

The invention relates to a method for granulating a flexible polyolefin resin. In particular, the invention relates to a method for granulating a flexible polyolefin resin which can reduce tackiness in the flexible polyolefin resin and prevent blocking and the like of the granulated product.

### BACKGROUND ART

Flexible polyolefin resins are widely used as raw materials for films and the like as a substitute for a flexible vinyl chloride resin with a large environmental load.
Since a flexible polyolefin resin contains a large amount of low molecular weight components by its nature, the surface of granules made of the resin may exhibit tackiness. Therefore, when a polymerized flexible polyolefin resin is granulated into granules with a size easy to handle by a common method of granulating general-purpose resins such as a sheet-cut method, strand-cut method, air hot-cut method, or underwater hot-cut method, there has been a problem that granules tend to adhere among themselves and form lumps (blocks). For this reason, as compared with other general-purpose resins, the flexible polyolefin resin must be handled at a lower temperature and requires countermeasures such as application of a release agent on the surface of the granules, thereby decreasing production efficiency of the granules.

As the method for granulating a flexible polyolefin resin, for example, a method of improving the surface tackiness of flexible polyolefin resin granules by controlling the average spherocrystal diameter in the center and surface of the flexible polyolefin resin granules has been disclosed (e.g. JP-A-7-258422).
In addition, a method of extruding a resin from a plurality of outlets facing downward from an extrusion die toward a cooling water pool, cutting the extruded resin into pellets by means of a rotating cutter under the outlets, and spraying cooling water containing a releasing agent from below has been disclosed (e.g. JP-A-7-88839).

However, these methods require a specific resin composition and application of a releasing agent to the surface of the granules. Therefore, further improvement has been demanded from the viewpoint of improvement of productivity of the granules.

In view of the above problems, the invention has an object of providing a method for efficiently granulating a flexible polyolefin resin.

### DISCLOSURE OF THE INVENTION

As a result of extensive studies to solve this subject, the inventors of the present invention have found that a tacky feeling of granules of a flexible polyolefin resin can be reduced by melting the resin, and granulating the resin after stirring and kneading the molten resin while cooling the molten resin to a temperature below the melting point. This finding has led to the completion of the invention.
According to the invention, the following methods for granulating a flexible polyolefin resin and granules are provided.
1. A method for granulating a polymer; said polymer being obtained by polymerizing an α-olefin with 3 to 20 carbon atoms using a metallocene catalyst, and
   satisfying the following (1), (2) and (3):
   (1) the polymer is a crystalline resin with a melting point (Tm-D) from 20 to 120°C, and
   (2) the crystallization time of the polymer is 3 minutes or more;
      said polymer being
   (3) polypropylene PP the isotacticity [mm] of which is 50 to 90 mol %; or
   (4) 1-butene polymer PB the isotacticity ((mmmm) /(mmrr+rmmr) ) of which is 20 or less; the method comprising the steps of:
      melting the polymer obtained by polymerizing an α-olefin with 3 to 20 carbon atoms using a metallocene catalyst,
      melt-kneading the polymer while cooling the polymer to a temperature of from the melting point (Tm-D) of the polymer to the melting point (Tm-D) of the polymer -30°C, the rate of cooling the polymer being 5 to 300°C/min, and
      granulating the polymer.
2. Granules of a polymer obtained by polymerizing an α-olefin with 3 to 20 carbon atoms using a metallocene catalyst granulated by the method according to 1.

Since the method for granulating a flexible polyolefin resin of the invention needs neither excessive cooling during granulation of the resin nor application or the like of a releasing agent to the surface of the granules, productivity of the granules can be enhanced.

### BRIEF DESCRIPTION OF THE DRAWINGS

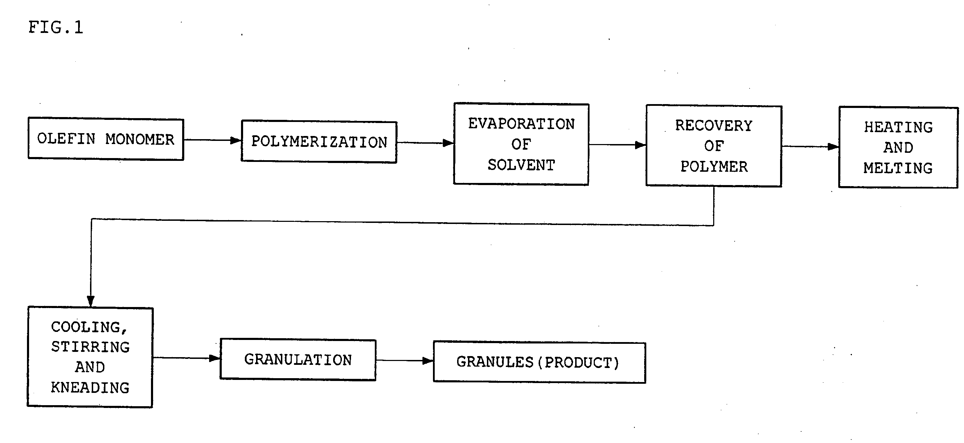

Fig. 1 is a flow chart for illustrating the granulation method of the invention.

### BEST MODE FOR CARRYING OUT THE INVENTION

The granulation method of a flexible polyolefin resin of the invention will now be described.
Fig. 1 is a flow chart for illustrating the granulating method of the invention.
The granulation method of the invention comprises heating a polymer obtained by polymerization of an olefin monomer and solvent vaporization to a molten state, and stirring and kneading the resin while cooling to a temperature below the melting point of the resin. The resin after this treatment is granulated to obtain a granule product.
Among the process steps shown in Figure 1, the steps up to the polymer recovery step can be carried out by methods commonly employed in the art.

According to the granulation method of the invention, the collected polymer is heated to melt the resin. The heating temperature of the flexible polyolefin resin may be a temperature sufficient to melt the resin, specifically, the melting point of the resin or a higher temperature, and preferably a temperature from the melting point + 20°C to the melting point + 60°C, is employed.
In order to melt the resin, a commonly used apparatus such as, for example, a heating medium or an electric heater can be used.

The resin in a molten state is melt-kneaded while cooling to a temperature below the melting point of the resin.
Any kneader that can homogeneously knead the resin at a temperature below the melting point, for example, a mixing roller, an intensive mixer, and the like for a batch process, and a uniaxial kneader, biaxial kneader, and the like for a continuous process, can be used.
The temperature of these kneaders can be controlled by installing a jacket around the outside circumference of the kneaders when heating and cooling. An electric heater, hot water, steam, hot oil, and the like can be used for heating.
Cooling water, low-temperature oil, and the like can be used for cooling. An instrument with an axle capable of passing water or oil therein can be employed.

The temperature for the melt-kneading is in a range from the glass transition temperature (Tg) to the melting point (Tm-D) of the resin. If the temperature is the melting point (Tm-D) or less, the viscosity of the resin increases so steeply that it is difficult to homogeneously knead the resin. For this reason, the temperature is in the range from [the melting point (Tm-D) - 30°C] to the melting point (Tm-D).
In the present specification, the melting point (Tm-D) of the resin is defined as the peaktop of the peak observed on the highest temperature side of a heat of fusion endothermic curve obtained by heating 10 mg of a sample after being retained at 10°C for 5 minutes in a nitrogen atmosphere, at a rate of 10°C/min, measured by using a differential scanning calorimeter (DSC).

The rate of cooling during melt-kneading of the resin is from 5 to 300°C/min. If the cooling rate is less than 5°C/min, the target temperature may not be reached in a practical machine; if more than 300°C/min, the cooling efficiency may be impaired and it may be difficult for the kneader to exhibit its capability. The cooling rate is preferably 5 to 100°C/min, and more preferably 10 to 50°C/min.

Since the flexible polyolefin resin processed in the above steps has reduced tackiness on the surface, the resin can be granulated by a common granulation method, for example, by a cold-cut method such as a sheet-cut method and strand-cut method, a hot-cut method such as an in-air hot-cut method and an underwater hot-cut method, and the like.

The granulation method of the invention is related to a polymer obtained by polymerizing an α-olefin with 3 to 20 carbon atoms using a metallocene catalyst. This is because the polymer obtained by polymerization using a metallocene catalyst has a uniform molecular weight and composition distribution and, therefore, contains only a very small amount of components that induce crystal nuclei.

As examples of the α-olefin with 3 to 20 carbon atoms, propylene, 1-butene, 1-hexene, 1-octene, 1-decene, 1-dodecene, 1-tetradecene, 1-hexadecene, 1-octadecene, 1-eicosene, and the like can be given. The polymer may be either a homopolymer of these α-olefins or a copolymer of these α-olefins. The copolymer may contain ethylene in addition to the above α-olefins. Preferable polymers are propylene-based polymers and 1-butene-based polymers.

The metallocene-type flexible polyolefin resin can be produced by polymerizing the above-mentioned α-olefins in the presence of a metallocene catalyst consisting of a transition metal compound of the group 4 of the periodic table containing cyclopentadienyl rings, methylaluminoxane or a compound forming an ion complex by the reaction with the transition metal compound of the group 4 of the periodic table, and an organoaluminum compound.
As examples of the main catalyst component of the transition metal compound of the group 4 of the periodic table containing cyclopentadienyl rings, a coordination compound of zirconium, titanium, or hafnium containing a multidentate compound as a ligand, in which at least two groups selected from the group consisting of cycloalkadienyl groups or substituted derivatives thereof, specifically, an indenyl group, substituted indenyl groups, and its partial hydrides are bonded with each other via a lower alkylene group or silylene group, can be given. Specifically, such transition metal compounds include stereorigid chiral compounds of zirconium or hafnium such as ethylene-bis-(indenyl)zirconium dichloride reported by H. H. Brintzinger et al in J. Organometal. Chem., 288, 63 (1985), ethylene-bis-(indenyl) hafnium dichloride described in J. Am. Chem. Soc., 109, 6544 (1987), dimethylsilylbis(2,4-dimethylcyclopentadienyl)zirconium dichloride, dimethylsilylbis(2,4,5-trimethylcyclopentadienyl)zirconium dichloride, or hafnium dichloride of these complexes reported by H. Yamazaki et al, in Chemistry Letters, 1853 (1989).

The following compounds can be given as specific examples: ethylenebis(indenyl)zirconium dichloride, ethylenebis(4,5,6,7-tetrahydro-1-indenyl)zirconium dichloride, ethylenebis(4-methyl-1-indenyl)zirconium dichloride, ethylenebis(5-methyl-1-indenyl)zirconium dichloride, ethylenebis(6-methyl-1-indenyl)zirconium dichloride, ethylenebis(7-methyl-1-indenyl)zirconium dichloride, ethylenebis(2,3-dimethyl-1-indenyl)zirconium dichloride, ethylenebis(4,7-dimethyl-1-indenyl)zirconium dichloride, ethylenebis(indenyl)hafnium dichloride, ethylenebis(4,5,6,7-tetrahydro-1-indenyl)hafnium dichloride, ethylenebis(4-methyl-1-indenyl)hafnium dichloride, ethylenebis(5-methyl-1-indenyl)hafnium dichloride, ethylenebis(6-methyl-1-indenyl)hafnium dichloride, ethylenebis(7-methyl-1-indenyl)hafnium dichloride, ethylenebis(2,3-dimethyl-1-indenyl)hafnium dichloride, ethylenebis(4,7-dimethyl-1-indenyl)hafnium dichloride, dimethylsilylenebis(indenyl)zirconium dichloride, dimethylsilylenebis(indenyl)hafnium dichloride, dimethylsilylenebis(4-methylindenyl)zirconium dichloride, dimethylsilylenebis(indenyl)hafnium dichloride, dimethylsilylenebis(2,4,5-trimethylcyclopentadienyl) zirconium dichloride, dimethylsilylenebis(2,4,5-trimethylcyclopentadienyl)hafnium dichloride, dimethylsilylenebis(2,4-dimethylcyclopentadienyl)zirconium dichloride, dimethylsilylenebis(2,4-dimethylcyclopentadienyl)hafnium dichloride, dimethylsilylenebis(3-methylcyclopentadienyl)zirconium dichloride, dimethylsilylenebis(3-methylcyclopentadienyl)hafnium dichloride, dimethylsilylenebis(2-methyl-4-phenylindenyl)zirconium dichloride, and dimethylsilylenebis(benzoindenyl)zirconium dichloride.

Furthermore, (dimethylsilylene)(dimethylsilylene)-bis(indenyl)zirconium dichloride, (ethylene)(ethylene)bis(indenyl)zirconium dichloride, (ethylene)(ethylene)bis(3-methylindenyl)zirconium dichloride, and (ethylene)(ethylene)bis(4,7-dimethylindenyl)zirconium dichloride, as well as compounds with the zirconium in these compounds substituted with hafnium or titanium can be given.

The following compounds can be suitably used as the co-catalyst, which is a compound forming an ionic complex by reacting with the transition metal compound of the group 4 of the periodic table: tetra(pentafluorophenyl)borate anion-containing compounds such as triphenylcarbenium tetrakis(pentafluorophenyl)borate, N,N-dimethylanilinium tetrakis(pentafluorophenyl)borate, and lithium tetrakis(pentafluorophenyl)borate, and tetra (pentafluorophenyl)aluminate anion-containing compounds such as triphenylcarbenium tetrakis(pentafluorophenyl)aluminate, N,N-dimethylanilinium tetrakis(pentafluorophenyl)aluminate, and lithium tetrakis(pentafluorophenyl)aluminate.

As the organoaluminum compound, compounds having at least one Al-C bond in the molecule can be given. As specific examples of such organoaluminum compounds, trialkylaluminums such as triethylaluminum, triisobutylaluminum, and trihexylaluminum, dialkylaluminum halides such as diethylaluminum halide and diisobutylaluminum halide, a mixture of trialkylaluminum and dialkylaluminum halide, and alkylalmoxanes such as tetraethyldialmoxane and tetrabutylalmoxane can be given. Of these organoaluminum compounds, trialkylaluminum, a mixture of trialkylaluminum and dialkylaluminum halide, and alkylalmoxane are preferable, with particularly preferable organoaluminum compounds being triethylaluminum, triisobutylaluminum, a mixture of triethylaluminum and diethylaluminum chloride, and tetraethyldialmoxane. As organoaluminum, triethylaluminum, triisobutylaluminum, and the like are preferably used. These metallocene catalysts and/or co-catalysts may be used carried on a carrier. As the carrier, organic compounds such as polystyrene and inorganic oxides such as silica and alumina can be given.

As the polymerization method, any of a mass polymerization method, solution polymerization method, vapor phase polymerization method, suspension polymerization method, and the like can be given, and either a batch system or continuous system can be used.
Preliminary polymerization using a small amount of α-olefins such as ethylene, propylene, 1-butene, and 4-methyl-1-pentene may be carried out. The reaction is carried out usually at a temperature of -50 to 250°C, and preferably 0 to 150°C, usually for 1 to 10 hours under a pressure usually from atmospheric pressure to 300 kg/cm²-G.

The granulation method of the invention is particularly applied to a flexible polyolefin resin having the following properties:
(1) the flexible polyolefin resin is a crystalline resin with a melting point (Tm-D) from 20 to 120°C, and
(2) the crystallization time of the flexible polyolefin resin is 3 minutes or more.
If the melting point (Tm-D) is less than 20°C, the crystalline resin is possibly handled only with difficulty at room temperature; whereas if the melting point (Tm-D) is more than 120°C, there may be the case in which the advantageous effect of the invention is not efficiently exhibited. The melting point (Tm-D) is preferably 50 to 100°C, and more preferably 60 to 90°C.
In the invention, a crystalline resin refers to a resin of which the above-mentioned melting point (Tm-D) is observed.

The crystallization time is preferably three minutes or more. If the crystallization time is less than three minutes, the effect of promoting crystallization is small.
Because of the remarkable effect on promoting crystallization, the crystallization time is preferably five minutes or more, and more preferably ten minutes or more.
The crystallization time is measured with a differential scanning calorimeter as follows: A sample is maintained in a molten state at 190°C for three minutes in a nitrogen atmosphere, rapidly quenched to 25°C at a rate of about 300°C/min. by introducing liquid nitrogen, and maintained at this temperature. The crystallization time refers to the period of time from when the sample is cooled to 25°C until the crystallization exothermic peak is observed.

Even if cooled to a temperature below the melting point, such a flexible polyolefin resin is only brought into a supercooled state, but does not lose fluidity (even if cooled below the crystallization temperature, the resin does not easily crystallize). For this reason, the resin maintains flowability during melt-kneading at a temperature below the melting point and crystallizes for the first time when extruded from a kneader, whereby it is easily cut.
The melting point (Tm-D) and crystallization time of the flexible polyolefin resin can be controlled by adjusting the isotacticity mentioned later.

The flexible polyolefin resin is polypropylene with a PP isotacticity [mm] of 50 to 90 mol%.
If less than 50 mol%, the resin may exhibit tackiness; if more than 90 mol%, processability may decrease. The PP isotacticity [mm] is preferably 50 to 80 mol%, and more preferably 60 to 80 mol%.
The PP isotacticity [mm] in the invention refers to a value determined by a method proposed by A. Zambelli et al. in Macromolecules, 6925 (1973).

Also, the flexible polyolefin resin is a 1-butene polymer having a PB isotacticity of ((mmmm)/(mmrr + rmmr)) of 20 or less. If the PB isotacticity exceeds 20, flexibility is insufficient and the processability is impaired.
In the invention, the PB isotacticity of ((mmmm)/(mmrr + rmmr)) is calculated from the mesopentad fraction (mmmm) and abnormal insertion content (1,4 insertion fraction). The mesopentad fraction (mmmm) and abnormal insertion content (1,4 insertion fraction) are measured according to the methods reported by Asakura et al. (Polymer Journal, 16, 717 (1984)), J. Randall et al. (Macromol. Chem. Phys., C29, 201 (1989)), and V. Busico et al. (Macromol. Chem. Phys., 198, 1257(1997)). Specifically, the method includes measuring the signals of the methylene group and methine group using ¹³C-NMR spectrum, determining the mesopentad fraction and abnormal insertion content in a poly(1-butene) molecule, and calculating the PB isotacticity of ((mmmm)/(mmrr + rmmr)).

The PP isotacticity [mm] and PB isotacticity ((mmmm)/(mmrr + rmmr)) can be controlled by adjusting the type of catalyst, polymerization temperature, and monomer concentration.

### EXAMPLES

The invention is described below specifically by way of examples. However, the invention is not limited to the following examples.
The properties of the resins polymerized in the preparation examples were measured according to the following methods.

### (1) Molecular weight (Mw) and molecular weight distribution (Mw/Mn)

The mass average molecular weight (Mw) and number average molecular weight (Mn) were measured using the following instrument under the following conditions, from which Mw/Mn was calculated.
- GPC measurement apparatus
   Column: TOSO GMHHR-H(S)HT
   Detector: RI detector for liquid chromatogram WATERS 150C
- Measuring conditions
   Solvent: 1,2,4-trichlorobenzene
   Measurement temperature: 145°C
   Flow rate: 1.0 ml/min.
   Concentration of sample: 2.2 mg/ml
   Injection amount: 160 µl
   Calibration curve: Universal Calibration
   Analysis program: HT-GPC (Ver. 1.0)

### (2) PP isotacticity [mm] and PB isotacticity ((mmmm)/(mmrr + rmmr))

Measured by the above-described method. ¹³C-NMR spectrum was measured using the following instrument under the following conditions.
Instrument: JNM-EX400 ¹³C-NMR analyzer manufactured by JEOL Ltd.
Method: Proton complete decoupling method
Concentration: 230 mg/ml
Solvent: 90:10 (volume ratio) mixed solvent of 1,2,4-trichlorobenzene and benzene-d₆
Temperature: 130°C
Pulse width: 45°
Pulse repeat time: 4 seconds
Integration: 10,000 times

### (3) Glass transition temperature (Tg), melting point (Tm-D), and crystallization time

Measured by the above-described method using a differential scanning calorimeter (DSC: "DSC-7" manufactured by PerkinElmer, Inc.).

### Preparation Example 1

Metallocene polybutene-1 was prepared as a flexible polyolefin resin by the following method.

### (1) Metallocene catalyst [Synthesis of (1,2'-dimethylsilylene)(2,1'-dimethylsilylene)-bis(3-trimethylsilylmethylindenyl)zirconium dichloride]

Using a Schlenk bottle, 3.0 g (6.97 mmol) of lithium salt of (1,2'-dimethylsilylene)(2,1'-dimethylsilylene)-bis (indene) was dissolved in 50 ml of THF and the solution was cooled to -78°C. After slowly adding dropwise 2.1 ml (14.2 mmol) of iodomethyltrimethylsilane, the mixture was stirred at room temperature for 12 hours. The solvent was evaporated, 50 ml of ether was added, and the mixture was washed with a saturated ammonium chloride solution. After phase separation, the organic layer was dried and the solvent was removed to obtain 3.04 g (5.88 mmol) of (1,2'-dimethylsilylene)(2,1'-dimethylsilylene)-bis(3-trimethylsilylmethylindene). The yield was 84%.

Next, a Schlenk bottle was charged with the resulting 3.04 g (5.88 mmol) of (1,2'-dimethylsilylene) (2,1'-dimethylsilylene)-bis(3-trimethylsilylmethylindene) and 50 ml of ether in a nitrogen gas stream. After cooling to -78°C, 7.6 ml (11.7 mmol) of 1.54 M n-butyllithium solution in hexane was added and the mixture was stirred for 12 hours at room temperature. The solvent was evaporated and the resulting solid was washed with 40 ml of hexane to obtain 3.06 g (5.07 mmol) of a lithium salt as an ether addition compound. The yield was 73%.
The result of ¹H-NMR (90 MHz, THF-d₈) measurement was as follows: δ 0.04 (s, 18H, trimethylsilyl), 0.48 (s, 12H, dimethylsilylene), 1.10 (t, 6H, methyl) ,2.59 (s, 4H, methylene), 3.38 (q, 4H, methylene), 6.2-7.7 (m, 8H, Ar-H)

The lithium salt obtained above was dissolved in 50 ml of toluene in a nitrogen stream. After cooling the solution to -78°C, a suspension of 1.2 g (5.1 mmol) of zirconium tetrachloride in toluene (20 ml) which was previously cooled to -78°C was added dropwise. After the addition, the mixture was stirred at room temperature for six hours. The solvent was evaporated from the reaction solution. The resulting residue was recrystallized using dichloromethane to obtain 0.9 g (1.33 mmol) of (1,2'-dimethylsilylene)(2,1'-dimethylsilylene)-bis(3-trimethylsilylmethylindenyl)zirconium dichloride.
The yield was 26%.
The result of ¹H-NMR (90 MHz, CDCl₃) measurement was as follows: δ 0.0 (s, 18H, trimethylsilyl), 1.02, 1.12 (s, 12H, dimethylsilylene), 2.51 (dd, 4H, methylene), 7.1-7.6 (m, 8H, Ar-H)

### (2) Polymerization of polybutene-1

A stainless steel reactor with an internal volume of 0.20 m³ equipped with a stirrer was continuously charged with n-heptane at a rate of 20 l/hr, triisobutylaluminum (manufactured by Nippon Aluminum Alkyls, Ltd.) at 16 mmol/hr, methylaluminoxane (manufactured by Albemarle Corp.) at 17 mmol/hr, and (1,2'-dimethylsilylene)(2,1'-dimethylsilylene)-bis(3-trimethylsilylmethylindenyl)zirconium chloride obtained above (1) at 17 µmol/hr. Polybutene-1 was obtained by polymerizing while continuously supplying 1-butene and hydrogen under the conditions of a polymerization temperature of 60°C, a gas phase hydrogen concentration of 50 mol%, and a total pressure in the reactor of 0.7 MPaG.

After the addition of Irganox 1010 (manufactured by Ciba Specialty Chemicals Co., Ltd.) to the resulting polymer solution to a concentration of 500 ppm, the solvent was removed by a batch operation using a stainless steel vaporizer with an internal volume of 3 m³ at an internal temperature of 200°C. The solvent removal time was 24 hours. Then, the molten resin was extruded using a gear pump. The extruded product was collected on a batt and allowed to cool at room temperature to obtain solid polybutene-1. The cooling time was 24 hours.

The resulting metallocene polybutene-1 was evaluated to confirm that the molecular weight distribution (Mw/Mn) was 1.8, the molecular weight (Mw) was 70,000, the PB isotacticity ((mmmm)/(mmrr + rmmr)) was 8.24 (mmmm = 71.03, mmrr + rmmr = 8.62), the glass transition temperature (Tg) was -29°C, and the melting point (Tm-D) was 71°C. The crystallization time was 30 minutes or more.

### Preparation Example 2

Metallocene polypropylene was prepared as a flexible polyolefin resin by the following method.
(1) A stainless steel reactor with an internal volume of 0.20 m³ equipped with a stirrer was continuously charged with n-heptane at a rate of 30 1/hr, triisobutylaluminum (manufactured by Nippon Aluminum Alkyls, Ltd.) at 15 mmol/hr, methylaluminoxane (manufactured by Albemarle Corp.) at 15 mmol/hr, and (1,2'-dimethylsilylene)(2,1'-dimethylsilylene)-bis(3-trimethylsilylmethylindenyl)zirconium dichloride obtained in the Preparation Example 1(1) at 15 µmol/hr. Polypropylene was obtained by polymerizing while continuously supplying propylene and hydrogen under the conditions of a polymerization temperature of 60°C, a gas phase hydrogen concentration of 50 mol%, and a total pressure in the reactor of 0.7 MPaG.

After the addition of Irganox 1010 to the resulting polymer solution to a concentration of 500 ppm, the solvent was removed by a batch operation using a stainless steel vaporizer with an internal volume of 3 m³ at an internal temperature of 200°C. The solvent removal time was 24 hours. Then, the molten resin was extruded using a gear pump. The extruded product was collected on a batt and allowed to cool to solidify at room temperature, thereby obtaining polypropylene. The cooling time was 24 hours.

The resulting metallocene polypropylene was evaluated to confirm that the molecular weight distribution (Mw/Mn) was 1.8, the molecular weight (Mw) was 33,000, the PP isotacticity [mm] was 67, the glass transition temperature (Tg) was -4°C, and the melting point (Tm-D) was 70°C. The crystallization time was 6 minutes.

### Example 1

Metallocene polybutene-1 prepared in Preparation Example 1 was heated and melted at 100°C using a polymer dissolution vessel equipped with a heating jacket. The molten resin was melt-kneaded using a biaxial kneader ("KRC-S1" manufactured by Kurimoto, Ltd.). In this instance, the rotational speed of the screw was 96 rpm to adjust the residence time of the resin in the kneader to six minutes and the temperature of the kneader was set so that the temperature of the resin was at 60°C at the exit of the kneader (the cooling rate of resin: 6.6°C/min.). The driving force required for the kneader during kneading of the resin was 0.12 to 0.4 kW.
The kneader's driving force during kneading is 0.01 to 1 kW, and preferably 0.1 to 0.5 kW.
15g of polybutene-1 extruded from the kneader was immediately sandwiched between two sheets of steel plate, each having a dimension of 300 × 300 × 6^{t} mm to measure the tackiness after allowing to stand for 60 seconds. As a result, the polybutene-1 was easily peeled off from the steel plates, confirming low surface tackiness.

### Comparative Example 1

The polybutene-1 resin was processed in the same manner as in Example 1 except that the resin was heated at 80°C (the cooling rate of resin: 3.3°C/min.). The tackiness of the resulting resin was evaluated in the same manner as in Example 1. As a result, the resin could not be peeled off from the steel plates, confirming high surface tackiness.

### Comparative Example 2

After heating to 100°C to melt, the polybutene-1 resin was allowed to stand to cool to 60°C without using the biaxial kneader. The cooling rate was 38°C/min.
When cooled to 60°C, the tackiness of the resin was evaluated in the same manner as in Example 1. As a result, the resin could not be peeled off from the steel plates, confirming high surface tackiness.

### Example 2

The polybutene-1 resin was processed in the same manner as in Example 1 except that the temperature of the kneader was adjusted so that the temperature of the resin after six minute kneading was 40°C (the cooling rate of resin: 10°C/min.). The tackiness of the resulting resin was evaluated in the same manner as in Example 1. As a result, the polybutene-1 was easily peeled off from the steel plates, confirming low surface tackiness.

### Example 3

The same experiment as in Example 1 was conducted except for using the metallocene polypropylene resin prepared in Preparation Example 2 instead of the polybutene-1. The tackiness of resulting resin was evaluated in the same manner as in Example 1. As a result, the polypropylene was easily peeled off from the steel plates, confirming low surface tackiness.

### INDUSTRIAL APPLICABILITY

The method for granulating a flexible polyolefin resin of the invention needs neither excessive cooling during granulation of the resin nor application or the like of a releasing agent to the surface of granules. Therefore, productivity of the granules can be improved.

## Claims

1. A method for granulating a polymer;
said polymer being obtained by polymerizing an α-olefin with 3 to 20 carbon atoms using a metallocene catalyst, and satisfying the following (1), (2) and (3):
(1) the polymer is a crystalline resin with a melting point (Tm-D) from 20 to 120°C, and
(2) the crystallization time of the polymer is 3 minutes or more; said polymer being
(3) polypropylene PP the isotacticity [mm] of which is 50 to 90 mol %; or
(4) 1-butene polymer PB the isotacticity ((mmmm) / (mmrr+rmmr)) of which is 20 or less;
the method comprising the steps of:
melting the polymer obtained by polymerizing an α-olefin with 3 to 20 carbon atoms using a metallocene catalyst,
melt-kneading the polymer while cooling the polymer to a temperature of from the melting point (Tm-D) of the polymer to the melting point (Tm-D) of the polymer -30°C, the rate of cooling the polymer being 5 to 300°C/min, and granulating the polymer.

2. Granules of a polymer obtained by polymerizing an α-olefin with 3 to 20 carbon atoms using a metallocene catalyst granulated by the method of claim 1.

## Patentansprüche

1. Verfahren zur Granulierung eines Polymeren;
wobei das Polymer erhalten wird durch Polymerisieren eines α-Olefins mit 3 bis 20 Kohlenstoffatomen unter Verwendung eines Metallocen-Katalysators, und die folgenden (1), (2) und (3) erfüllt:
(1) Das Polymer ist ein kristallines Harz mit einem Schmelzpunkt (Tm-D) von 20 bis 120°C, und
(2) die Kristallisationszeit des Polymeren ist 3 Minuten oder mehr;
wobei das Polymer ist
(3) Polypropylen PP, dessen Isotaktizität [mm] 50 bis 90 mol % beträgt; oder
(4) 1-Buten-Polymer PB, dessen Isotaktizität ((mmmm) / (mmrr+rmmr)) 20 oder weniger beträgt;
wobei das Verfahren die Schritte umfasst:
Schmelzen des durch Polymerisieren eines α-Olefins mit 3 bis 20 Kohlenstoffatomen unter Verwendung eines Metallocen-Katalysators erhaltenen Polymeren,
Schmelz-Kneten des Polymeren, während das Polymer auf eine Temperatur vom Schmelzpunkt (Tm-D) des Polymeren zum Schmelzpunkt (Tm-D) des Polymeren -30°C gekühlt wird, wobei die Abkühlungsgeschwindigkeit des Polymeren 5 bis 300°C/min beträgt, und
Granulieren des Polymeren.

2. Granulat aus einem Polymer, das erhalten wird durch Polymerisieren eines α-Olefins mit 30 bis 20 Kohlenstoffatomen unter Verwendung eines Metallocen-Katalysators, das durch das Verfahren nach Anspruch 1 granuliert wird.

## Revendications

1. Procédé de granulation d'un polymère ;
ledit polymère étant obtenu par polymérisation d'une α-oléfine ayant 3 à 20 atomes de carbone en utilisant un catalyseur métallocène, et satisfaisant les points suivants (1), (2) et (3) :
(1) le polymère est une résine cristalline avec un point de fusion (Tm - D) de 20°C à 120°C, et
(2) le temps de cristallisation du polymère est de 3 minutes ou plus ; ledit polymère étant
(3) un polypropylène PP dont l'isotacticité [mm] est de 50 à 90 % en mol ; ou
(4) un polymère de 1-butène PB dont l'isotacticité ((mmmm)/(mmrr + rmmr)) est de 20 ou moins ;
le procédé comprenant les étapes consistant à :
faire fondre le polymère obtenu par polymérisation d'une α-oléfine ayant 3 à 20 atomes de carbone en utilisant un catalyseur métallocène,
malaxer à l'état fondu le polymère tout en refroidissant le polymère à une température du point de fusion (Tm - D) du polymère au point de fusion (Tm - D) du polymère -30°C, la vitesse de refroidissement du polymère étant de 5 à 300°C/minute, et
granuler le polymère.

2. Granules d'un polymère obtenu par polymérisation d'une α-oléfine ayant 3 à 20 atomes de carbone en utilisant un catalyseur métallocène granulé par le procédé de la revendication 1.
